# FASCICULE DE BREVET EUROPEEN

(11) **EP 3 482 442 B1**
(45) Date de publication et mention de la délivrance du brevet: **28.07.2021**
(21) Numéro de dépôt: 17734794.5
(22) Date de dépôt: 09.06.2017
(51) Int. Cl.: H01M 10/0525, H01M 10/0567

(54) **CELLULE DE BATTERIE COMPRENANT UN ELECTROLYTE COMPRENANT UN SEL METALLIQUE**
BATTERIEZELLE MIT METALLSALZ ENTHALTENDER ELEKTROLYT
BATTERY CELL HAVING AN ELECTROLYTE CONTAINING A METAL SALT

(30) Priorité: 05.07.2016 FR 1656414
(43) Date de publication de la demande: 15.05.2019
(73) Titulaire: Renault S.A.S., 92100 Boulogne-Billancourt (FR)
(72) Inventeur: DELOBEL, Bruno, 75015 Paris (FR)
(74) Mandataire: Rougemont, Bernard
(86) Numéro de dépôt international: PCT/FR2017/051479
(87) Numéro de publication internationale: WO 2018/007698

(56) Documents cités:
- WO-A1-2015/134783
- WO-A1-2016/055220
- JP-A- 2002 231 306
- WU M-S ET AL: "Effects of copper trifluoromethanesulphonate as an additive to propylene carbonate-based electrolyte for lithium-ion batteries", ELECTROCHIMICA ACTA, ELSEVIER, AMSTERDAM, NL, vol. 49, no. 25, 1 October 2004 (2004-10-01), pages 4379-4386, XP004521159, ISSN: 0013-4686, DOI: 10.1016/J.ELECTACTA.2004.04.029
- KOMABA S ET AL: "Impact of 2-Vinylpyridine as Electrolyte Additive on Surface and Electrochemistry of Graphite for C/LiMn2O4 Li-Ion Cells", JOURNAL OF THE ELECTROCHEMICAL SOCIETY, ELECTROCHEMICAL SOCIETY, US, vol. 152, no. 5, 1 January 2005 (2005-01-01), pages A937-A946, XP007910467, ISSN: 0013-4651, DOI: 10.1149/1.1885385

## Description

L'invention concerne le domaine général des batteries rechargeables lithium-ion (Li-ion).

L'invention concerne plus précisément les électrolytes pour batteries Li-ion comprenant une électrode positive, une électrode négative à base de carbone et un séparateur.

Classiquement, les batteries Li-ion comprennent une ou plusieurs électrodes positives, une ou plusieurs électrodes négatives, un électrolyte et un séparateur composé d'un polymère poreux ou de tout autre matériau approprié afin d'éviter tout contact direct entre les électrodes.

Les batteries Li-ion sont de plus en plus utilisées comme source d'énergie autonome, en particulier dans les applications liées à la mobilité électrique. Cette tendance s'explique notamment par des densités d'énergie massique et volumique nettement supérieures à celles des accumulateurs classiques nickel cadmium (Ni-Cd) et nickel-hydrure métallique (Ni-MH), une absence d'effet mémoire, une auto-décharge faible par rapport à d'autres accumulateurs et également par une baisse des coûts au kilowatt-heure liée à cette technologie.

Les électrolytes utilisés généralement dans les batteries Li-ion comprennent un ou plusieurs sel(s) de lithium, un ou plusieurs solvant(s) et un ou plusieurs additifs.

Les additifs les plus connus sont la propane sultone et le carbonate de vinylène. Ils sont employés afin d'améliorer la qualité d'une couche appelée « Solid Electrolyte Interphase » (SEI) à la surface de l'électrode négative. La formation d'une SEI solide et stable est nécessaire en vue de l'obtention de bonnes performances électrochimiques. En effet, une dégradation de la SEI, probablement due à des réactions parasites à l'interface électrode/électrolyte, entraîne une chute des performances.

Malheureusement, ces additifs ne permettent pas de résoudre tous les problèmes, vis-à-vis notamment de l'impédance de la cellule de batterie qui n'est pas suffisamment stabilisée ou encore vis-à-vis de la résistance de l'électrolyte.

Le document WO 2015/134783 divulgue un matériau actif d'électrode traité en surface destiné à être utilisé dans une batterie Li-ion. Le matériau actif d'électrode comprend une couche ioniquement conductrice comprenant un métal multivalent. Le matériau actif d'électrode traité en surface permet d'améliorer la rétention de capacité et la durée de la vie de la batterie Li-ion et réduit également les réactions indésirables à la surface du matériau actif d'électrode.

Ce document décrit également un électrolyte comprenant un sel métallique selon une concentration allant de 0,01M à 0,2M.

Ce document précise également que ledit électrolyte est utilisé dans une cellule comprenant une électrode négative à base d'espèce chimique choisie parmi le titanate de lithium, d'oxyde de cobalt lithium, d'oxyde de manganèse lithium, de phosphate de fer lithium, d'oxyde de cobalt manganèse nickel lithium et d'oxyde d'aluminium cobalt nickel lithium

De plus, le document WO 2015/134783 A1 divulgue une cellule de batterie Li-ion comprenant des matériaux pertinents à l'invention.

Il serait donc avantageux de fournir une cellule de batterie Li-ion comprenant un électrolyte particulier permettant d'améliorer les performances électrochimiques de ladite cellule, notamment en termes de rétention de capacité mais aussi au niveau de l'impédance de la cellule.

L'invention a donc pour objet une cellule de batterie Li-ion selon la revendication 1.

Un autre objet de l'invention est une batterie Li-ion comprenant la cellule selon l'invention.

L'invention a pour objet l'utilisation du sel de bis(trifluorométhanesulfonyle) imide de manganèse Mn(TFSI)₂ en tant qu'additif pour l'amélioration de la rétention de capacité d'une cellule de batterie Li-ion.

D'autres avantages et caractéristiques de l'invention apparaîtront plus clairement à l'examen de la description détaillée et des dessins annexés sur lesquels :
- la figure 1 est un graphe montrant l'évolution de la capacité de cellules de batterie Li-ion comprenant différents électrolytes, en fonction du nombre de cycles de charge et de décharge,
- la figure 2 est un graphe montrant l'évolution de la capacité irréversible cumulée de cellules de batteries Li-ion comprenant différents électrolytes, en fonction du nombre de cycles de charge et de décharge,
- la figure 3 est un graphe montrant l'évolution de l'impédance de cellules de batteries Li-ion comprenant différents électrolytes, en fonction de la fréquence.

Dans la description de l'invention, le terme « à base de » est synonyme de « comprenant majoritairement ».

Il est par ailleurs précisé que l'expression « de... à... » utilisée dans la présente description doit s'entendre comme incluant chacune des bornes mentionnées, et que l'expression « compris ... entre ... et ... » doit s'entendre comme excluant chacune des bornes mentionnées.

La cellule selon l'invention comprend un électrolyte comprenant au moins un additif, au moins un sel de lithium, au moins un solvant et au moins un sel métallique de formule (I) telle que mentionnée ci-dessus.

L'additif est choisi parmi le carbonate de vinylène, la propane sultone et leur mélange.

Selon un mode de réalisation particulier, le sel de lithium est l'hexafluorophosphate de lithium.

Avantageusement, ledit solvant est choisi parmi les éthers, les nitriles, les sulfones, le carbonate d'éthylène, le carbonate de méthyle et d'éthyle, le carbonate de diméthyle, le carbonate de diéthyle et leurs mélanges, de préférence choisi parmi le carbonate d'éthylène, le carbonate de méthyle et d'éthyle, le carbonate de diméthyle, le carbonate de diéthyle et leurs mélanges.

Comme indiqué ci-dessus, la cellule selon l'invention comprend au moins un sel métallique électroniquement neutre qui est le sel de bis(trifluorométhanesulfonyle)imide de manganèse Mn(TFSI)₂.

De préférence, la concentration du sel métallique va de 0,0001 M à 0,01 M, plus préférentiellement de 0,001 M à 0,005 M.

La cellule selon l'invention comprend un électrolyte comprenant au moins un additif choisi parmi le carbonate de vinylène, la propane sultone et leur mélange, et de l'hexafluorophosphate de lithium.

Selon un mode de réalisation particulier de l'invention, la cellule selon l'invention comprend un électrolyte comprenant de l'hexafluorophosphate de lithium et au moins un solvant choisi parmi le carbonate d'éthylène, le carbonate de méthyle et d'éthyle, le carbonate de diméthyle, le carbonate de diéthyle et leurs mélanges.

De manière préférée, la cellule selon l'invention comprend au moins un solvant choisi parmi le carbonate d'éthylène, le carbonate de méthyle et d'éthyle, le carbonate de diméthyle, le carbonate de diéthyle et leurs mélanges, et du sel de bis(trifluorométhanesulfonyle)imide de manganèse Mn(TFSI)₂.

Préférentiellement, la cellule selon l'invention comprend au moins un solvant choisi parmi le carbonate d'éthylène, le carbonate de méthyle et d'éthyle, le carbonate de diméthyle, le carbonate de diéthyle et leurs mélanges, et du sel de bis(trifluorométhanesulfonyle)imide de manganèse Mn(TFSI)₂ selon une concentration allant de 0,001 M à 0,005 M.

La cellule selon l'invention comprend un électrolyte comprenant au moins un additif choisi parmi le carbonate de vinylène, la propane sultone et leur mélange, de l'hexafluorophosphate de lithium, au moins un solvant choisi parmi le carbonate d'éthylène, le carbonate de méthyle et d'éthyle, le carbonate de diméthyle, le carbonate de diéthyle et leurs mélanges, et du sel de bis(trifluorométhanesulfonyle)imide de manganèse Mn(TFSI)₂.

De manière préférée, le matériau pour électrode positive est à base d'un matériau actif représenté par un oxyde lithié de métal choisi parmi le nickel, le cobalt, le manganèse et leurs mélanges.

Avantageusement, le matériau actif pour électrode positive est le LiNi_{0,5}Mn_{0,3}Co_{0,2}O₂.

Outre le matériau actif, le matériau pour électrode positive peut également comprendre des fibres de carbone. De préférence, ce sont des fibres de carbone à croissance en phase vapeur (VGCF pour « Vapor Grown Carbon Fibers ») commercialisées par la société Showa Denko. D'autres types de fibres de carbone appropriés peuvent être des nanotubes de carbone, des nanotubes dopés (éventuellement au graphite), des nanofibres de carbone, des nanofibres dopées (éventuellement au graphite), des nanotubes de carbone monofeuillets ou des nanotubes de carbone multifeuillets. Les méthodes de synthèse relatives à ces matériaux peuvent inclure une décharge par arc, une ablation laser, une torche à plasma et une décomposition chimique en phase vapeur.

Le matériau pour électrode positive peut en outre comprendre un ou plusieurs liants.

De manière préférée, le ou les liant(s) peuvent être choisis parmi les latex de polybutadiène-styrène et les polymères organiques, et de préférence parmi les latex de polybutadiène-styrène, les polyesters, les polyéthers, les dérivés polymère de méthylméthacrylate, les dérivés polymères d'acrylonitrile, la carboxyle méthyle cellulose et ses dérivés, les polyvinyles acétates ou polyacrylate acétate, les polyfluorure de vinylidène, et leurs mélanges.

De préférence, le liant est le polyfluorure de vinylidène (PVdF).

Selon un mode de réalisation préféré de l'invention, le matériau pour électrode négative est à base de graphite. Le carbone graphite peut être choisi parmi les carbones graphite synthétiques, et naturels à partir de précurseurs naturels suivis d'une purification et/ou d'un post traitement. D'autres matériaux actifs à base de carbone peuvent être utilisés comme le carbone pyrolitique, le carbone amorphe, le charbon actif, le coke, le brai de houille et le graphène. Des mélanges de graphite avec l'un ou plusieurs de ces matériaux sont possibles. Des matériaux possédant une structure noyau-enveloppe peuvent être utilisés quand le noyau comprend du graphite haute capacité et lorsque l'enveloppe comprend un matériau à base de carbone protégeant le noyau de la dégradation liée au phénomène répété de l'intercalation/désintercalation des ions lithiums.

Le matériau pour électrode négative à base de carbone peut en outre comprendre un ou plusieurs liants comme pour l'électrode positive.

Les liants décrits ci-dessus pour l'électrode positive peuvent être utilisés pour l'électrode négative.

De manière préférée, les liants utilisés sont la carboxyle méthyle cellulose (CMC) et le latex Styrofan®, c'est-à-dire un copolymère styrène-butadiène carboxylé.

Avantageusement, le séparateur est composé de polymères poreux, de préférence de polyéthylène et/ou de polypropylène.

Un autre objet de l'invention est une batterie Li-ion comprenant au moins une cellule telle que définie précédemment.

L'invention a pour objet l'utilisation du sel de bis(trifluorométhanesulfonyle) imide de manganèse Mn(TFSI)₂ en tant qu'additif pour l'amélioration de la rétention de capacité d'une cellule de batterie Li-ion.

La présente invention est illustrée de manière non-limitative par les exemples suivants.

### Exemples

### Préparation de l'électrode positive

Un matériau actif pour électrode positive de formule LiNi_{0,5}Mn_{0,3}Co_{0,2}O₂ est utilisé. L'électrode est préparée en mélangeant 95% en poids de matériau actif, 2,5% en poids d'un additif carbone Super P®, et 2,5% en poids de polyfluorure de vinylidène dissous dans du N-méthyl-2-pyrrolidone (NMP).

L'électrode est fabriquée en déposant le mélange sur une feuille d'aluminium de 20 µm d'épaisseur. Les électrodes sont séchées et compressées par calandrage à 80°C.

### Préparation de l'électrode négative

Un matériau actif de graphite est fourni par la société Hitachi MAGE. L'électrode est fabriquée en mélangeant 97% en poids de graphite, 1% en poids d'un additif carbone Super P®, 1% en poids de carboxyle méthyle cellulose (CMC) et 1% en poids de latex Styrofan®, c'est-à-dire un copolymère styrène-butadiène carboxylé.

Le mélange résultant est déposé sur une feuille de cuivre de 15 µm d'épaisseur puis séché et compressé par calandrage à 80°C.

### Séparateur

Le séparateur Celgard® 2500 est utilisé afin d'éviter tout court-circuit entre l'électrode positive et l'électrode négative durant les cycles de charge et de décharge.

Le séparateur Celgard® 2500 est une membrane de 25 µm d'épaisseur composée de polypropylène.

### Electrolyte

Deux électrolytes sont utilisés pour mener les essais comparatifs, dont les compositions sont reportées dans le tableau 1 :

**Tableau 1**

| Electrolyte | 1 (comparatif) | 2 (invention) |
|---|---|---|
| LiPF₆ (M) | 1 | 1 |
| EC/DEC (ratio en volume) | 1/1 | 1/1 |
| Carbonate de vinylène (% massique) | 2 | 2 |
| Mn(TFSI)₂ (mM) | - | 5 |

L'électrolyte 1 est composé d'1M de sel de lithium LiPF₆ dissous dans un mélange de carbonate d'éthylène et de carbonate de diéthyle (EC/DEC) selon un ratio 1/1 en volume, et de 2% en poids de carbonate de vinylène.

L'électrolyte 2 est composé d'1M de sel de lithium LiPF₆ dissous dans un mélange de carbonate d'éthylène et de carbonate de diéthyle (EC/DEC) selon un ratio 1/1 en volume, de 2% en poids de carbonate de vinylène, et de 5 mM de sel de bis(trifluorométhanesulfonyle)imide de manganèse Mn(TFSI)₂.

Les cellules sont finalement assemblées par empilement de l'électrode positive, de l'électrode négative telles que préparées ci-dessus, et du séparateur Celgard® 2500, situé entre les deux électrodes. Le séparateur est imprégné par l'électrolyte tel que précédemment décrit.

Ainsi, deux cellules de batterie Li-ion sont préparées. La cellule 1 comparative contient l'électrolyte 1 tandis que la cellule 2 selon l'invention contient l'électrolyte 2.

### Performances électrochimiques de cellules de batterie Li-ion

### Evaluation de la capacité en fonction du nombre de cycles

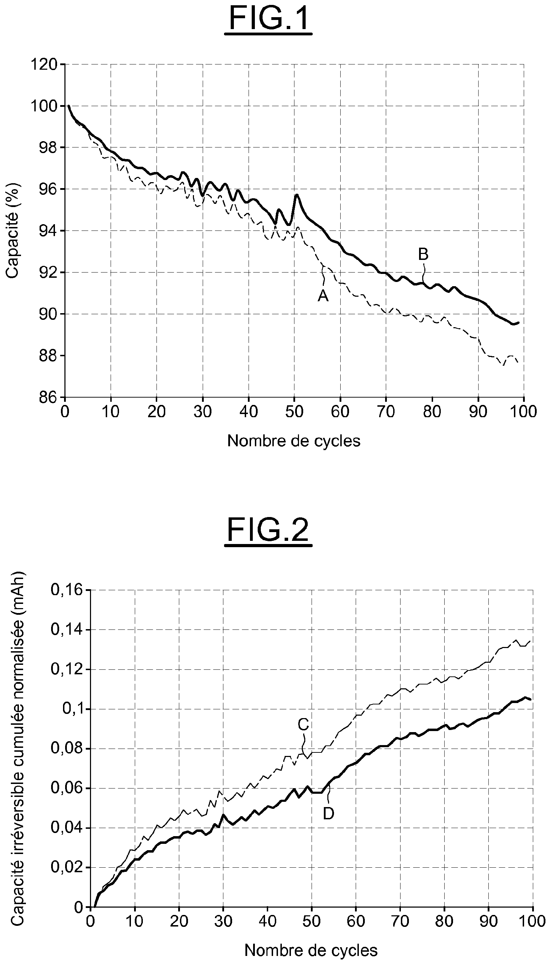

La figure 1 représente un graphe montrant l'évolution de la capacité des cellules de batteries Li-ion 1 et 2, en fonction du nombre de cycle de charge et de décharge.

### Méthode

Un procédé de cyclage a été utilisé. Le premier cycle, ou cycle d'activation, s'est déroulé à des tensions allant de 4,2 à 2,5 V à un régime de cyclage C/10. Les cycles de charge et de décharge suivants se sont déroulés à des tensions allant de 4,2 à 2,5 V à un régime de cyclage C/2.

### Résultat

Ainsi, la figure 1 montre clairement qu'une meilleure rétention de capacité est obtenue pour la cellule de batterie 2 (courbe B) selon l'invention par rapport à celle de la cellule de batterie 1 (courbe A) comparative. En effet, après 100 cycles de charge et de décharge, une rétention de capacité de l'ordre de 90% est observée pour la cellule 2 alors qu'une rétention de capacité de l'ordre de 88% est observée pour la cellule 1.

L'analyse de la figure 1 montre clairement l'effet bénéfique du sel de bis(trifluorométhanesulfonyle)imide de manganèse Mn(TFSI)₂ sur le comportement électrochimique d'une cellule de batterie Li-ion.

Ainsi, la cellule selon l'invention présente d'excellentes propriétés en termes de rétention de capacité.

### Evaluation de la capacité irréversible cumulée en fonction du nombre de cycles

La figure 2 représente un graphe montrant l'évolution de la capacité irréversible cumulée des cellules de batteries Li-ion 1 et 2, en fonction du nombre de cycle de charge et de décharge.

### Méthode

Un procédé de cyclage a été utilisé Le premier cycle, ou cycle d'activation, s'est déroulé à des tensions allant de 4,2 à 2,5 V à un régime de cyclage C/10. Les cycles de charge et de décharge suivants se sont déroulés à des tensions allant de 4,2 à 2,5 V à un régime de cyclage C/2.

### Résultat

Ainsi, la figure 2 montre clairement qu'une capacité irréversible cumulée plus faible est obtenue pour la cellule de batterie 2 (courbe D) selon l'invention par rapport à celle de la cellule de batterie 1 (courbe C) comparative. En effet, après 100 cycles de charge et de décharge, une capacité irréversible de l'ordre de 0,105 mAh est mesurée pour la cellule 2 alors qu'une capacité irréversible de l'ordre de 0,135 mAh est mesurée pour la cellule 1.

L'analyse de la figure 2 montre clairement l'effet bénéfique du sel de bis(trifluorométhanesulfonyle)imide de manganèse Mn(TFSI)₂ sur le comportement électrochimique de la cellule de batterie Li-ion.

Ainsi, la cellule selon l'invention présente d'excellentes propriétés en termes de capacité irréversible cumulée.

### Evaluation de l'impédance d'une cellule en fonction de la fréquence

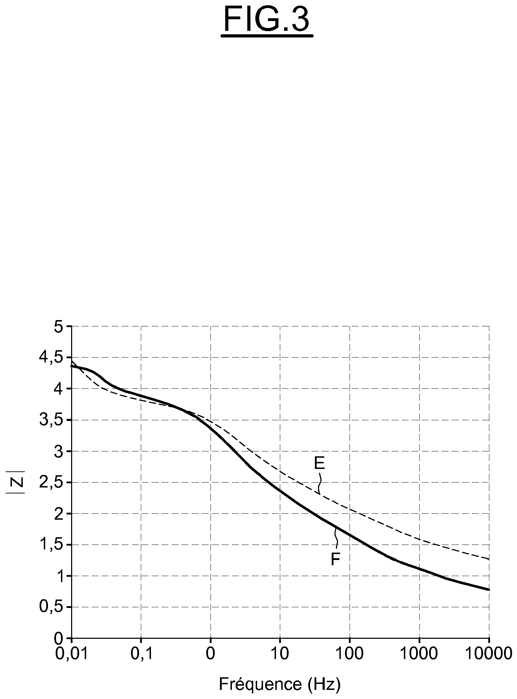

La figure 3 représente un graphe montrant l'évolution de l'impédance des cellules de batteries Li-ion 1 et 2, en fonction de la fréquence. L'impédance a été mesurée selon une procédure PEIS avec un signal de +/- 5 mv.

### Résultat

Ainsi, la figure 3 montre clairement qu'une stabilisation de l'impédance est observée à haute fréquence pour la cellule de batterie 2 (courbe F) selon l'invention par rapport à celle de la cellule de batterie 1 (courbe E) comparative. Cette stabilisation de l'impédance traduit une stabilisation dite de l'électrolyte. Cela représente un avantage car ladite stabilisation entraîne une diminution des réactions parasites au sein de l'électrolyte qui mènent à une décomposition dudit électrolyte. Cette diminution des réactions parasites permet de retarder la mort subite de la cellule, c'est-à-dire le moment où la cellule subit une dégradation telle qu'elle n'est plus apte à fonctionner.

L'analyse de la figure 3 montre clairement l'effet bénéfique du sel de bis(trifluorométhanesulfonyle)imide de manganèse Mn(TFSI)₂ sur le comportement électrochimique de la cellule de batterie Li-ion.

Il peut donc être déduit de l'analyse de l'ensemble des trois figures que la cellule selon l'invention comprenant l'électrolyte particulier tel que décrit ci-avant présente d'excellentes propriétés en termes de rétention de capacité et d'impédance.

## Revendications

1. Cellule de batterie Li-ion comprenant un matériau pour électrode positive, un matériau pour électrode négative à base de carbone, un séparateur et un électrolyte, ledit électrolyte comprenant :
- au moins un additif choisi parmi le carbonate de vinylène, la propane sultone et leur mélange ;
- au moins un sel de lithium choisi parmi le bis[(trifluorométhyl)sulfonyl]imide de lithium (LiN(CF3SO₂)₂), le trifluorométhane sulfonate de lithium (LiCF₃SO₃), le bis(oxalato)borate de lithium (LiBOB), le difluoro(oxolato) borate de lithium (LiDFOB), le bis(perfluoroéthylsulfonyl)imide de lithium (LiN(CF₃CF₂SO₂)₂), LiClO₄, LiAsF₆, LiPF₆, LiBF₄, Lil, LiCH₃SO₃, LiB(C₂O₄)₂, LiR_{F}SOSR_{F}, LiN(R_{F}SO₂)₂, LiC(R_{F}SO₂)₃, R_{F} étant un groupement choisi parmi un atome de fluor et un groupement perfluoroalkyle comportant de un à huit atomes de carbone ;
- au moins un solvant ; et
- au moins un sel métallique électroniquement neutre qui est le sel de bis(trifluorométhanesulfonyle)imide de manganèse Mn(TFSI)₂ :

2. Cellule selon la revendication 1, dans laquelle le sel de lithium est l'hexafluorophosphate de lithium.

3. Cellule selon la revendication 1 ou 2, dans laquelle ledit solvant est choisi parmi les éthers, les nitriles, les sulfones, le carbonate d'éthylène, le carbonate de méthyle et d'éthyle, le carbonate de diméthyle, le carbonate de diéthyle et leurs mélanges, de préférence choisi parmi le carbonate d'éthylène, le carbonate de méthyle et d'éthyle, le carbonate de diméthyle, le carbonate de diéthyle et leurs mélanges.

4. Cellule selon l'une quelconque des revendications précédentes, dans laquelle la concentration du sel métallique va de 0,0001 M à 0,01 M, de préférence de 0,001 M à 0,005 M.

5. Cellule selon l'une quelconque des revendications précédentes, dans laquelle le matériau pour électrode négative est à base de graphite.

6. Cellule selon l'une quelconque des revendications précédentes, dans laquelle le séparateur est composé de polymères poreux, de préférence de polyéthylène et/ou de polypropylène.

7. Batterie Li-ion comprenant au moins une cellule telle que définie à l'une quelconque des revendications précédentes.

## Patentansprüche

1. Li-Ionen-Batteriezelle, umfassend ein Material für eine positive Elektrode, ein Material für eine negative Elektrode auf Basis von Kohlenstoff, einen Separator und einen Elektrolyt, wobei der Elektrolyt Folgendes umfasst:
- mindestens ein Additiv, das aus Vinylencarbonat, Propansulton und einer Mischung davon ausgewählt ist;
- mindestens ein Lithiumsalz, das aus Lithiumbis[(trifluormethyl)sulfonyl] imid (LiN(CF₃SO₂)₂), Lithiumtrifluormethansulfonat (LiCF₃SO₃), Lithium-bis(oxalato)borat (LiBOB), Lithiumdifluoro-(oxolato)borat (LiDFOB), Lithiumbis(perfluorethyl-sulfonyl)imid (LiN(CF₃CF₂SO₂)₂), LiClO₄, LiAsF₆, LiPF₆, LiBF₄, LiI, LiCH₃SO₃, LiB(C₂O₄)₂, LiR_{F}SOSR_{F}, LiN(R_{F}SO₂)₂ und LiC(R_{F}SO₂)₃ ausgewählt ist, wobei R_{F} für eine Gruppe steht, die aus einem Fluoratom und einer Perfluoralkylgruppe mit eins bis acht Kohlenstoffatomen ausgewählt ist;
- mindestens ein Lösungsmittel und
- mindestens ein elektronisch neutrales Metallsalz, bei dem es sich um das Manganbis (trifluormethansulfonyl)imidsalz Mn(TFSI)₂ handelt.

2. Zelle nach Anspruch 1, wobei es sich bei dem Lithiumsalz um Lithiumhexafluorophosphat handelt.

3. Zelle nach Anspruch 1 oder 2, wobei das Lösungsmittel aus Ethern, Nitrilen, Sulfonen, Ethylencarbonat, Ethylmethylcarbonat, Dimethylcarbonat, Diethylcarbonat und Mischungen davon, vorzugsweise aus Ethylencarbonat, Ethylmethylcarbonat, Dimethylcarbonat, Diethylcarbonat und Mischungen davon, ausgewählt ist.

4. Zelle nach einem der vorhergehenden Ansprüche, wobei die Konzentration des Metallsalzes im Bereich von 0,0001 M bis 0,01 M, vorzugsweise von 0,001 M bis 0,005 M, liegt.

5. Zelle nach einem der vorhergehenden Ansprüche, wobei das Material für eine negative Elektrode auf Graphit basiert.

6. Zelle nach einem der vorhergehenden Ansprüche, wobei der Separator aus porösen Polymeren, vorzugsweise Polyethylen und/oder Polypropylen, besteht.

7. Li-Ionen-Batterie, umfassend mindestens eine Zelle gemäß einem der vorhergehenden Ansprüche.

## Claims

1. Li-ion battery cell comprising a material for a positive electrode, a material for a carbon-based negative electrode, a separator and an electrolyte, said electrolyte comprising:
- at least one additive chosen from vinylene carbonate, propane sultone and their mixture;
- at least one lithium salt chosen from lithium bis [(trifluoromethyl)sulfonyl]imide (LiN(CF₃SO₂)₂), lithium trifluoromethanesulfonate (LiCF₃SO₃), lithium bis(oxolato)borate (LiBOB), lithium difluoro(oxolato)borate (LiDFOB), lithium bis (perfluoroethylsulfonyl) imide (LiN(CF₂CF₃SO₂)₂), LiClO₄, LiAsF₆, LiPF₆, LiBF₄, LiI, LiCH₃SO₃, LiB(C₂O₄), LiR_{F}SOSR_{F}, LiN (R_{F}SO₂)₂ or LiC (R_{F}SO₂)₃, R_{F} being a group chosen from a fluorine atom and a perfluoroalkyl group comprising from one to eight carbon atoms;
- at least one solvent; and
- at least one electronically neutral metal salt which is the magnesium bis(trifluoromethanesulfonyl)imide salt Mn(TFSI)₂.

2. Cell according to Claim 1, in which the lithium salt is lithium hexafluorophosphate.

3. Cell according to Claim 1 or 2, in which said solvent is chosen from ethers, nitriles, sulfones, ethylene carbonate, ethyl methyl carbonate, dimethyl carbonate, diethyl carbonate and their mixtures, preferably chosen from ethylene carbonate, ethyl methyl carbonate, dimethyl carbonate, diethyl carbonate and their mixtures.

4. Cell according to any one of the preceding claims, in which the concentration of the metal salt ranges from 0.0001M to 0.01M, preferably from 0.001M to 0.005M.

5. Cell according to any one of the preceding claims, in which the material for a negative electrode is based on graphite.

6. Cell according to any one of the preceding claims, in which the separator is composed of porous polymers, preferably of polyethylene and/or of polypropylene.

7. Li-ion battery comprising at least one cell as defined in any one of the preceding claims.
